# EUROPÄISCHE PATENTSCHRIFT

(11) **EP 1 633 487 B1**
(45) Veröffentlichungstag und Bekanntmachung des Hinweises auf die Patenterteilung: **06.10.2010**
(21) Anmeldenummer: 03720513.5
(22) Anmeldetag: 22.04.2003
(51) Int. Cl.: B04B 1/20, F16H 61/42

(54) **ZENTRIFUGE MIT HYDRAULISCHER DIFFERENZDREHZAHLBESTIMMUNG**
CENTRIFUGE COMPRISING HYDRAULIC DIFFERENTIAL SPEED DETERMINATION
CENTRIFUGEUSE COMPORTANT UN SYSTEME HYDRAULIQUE DE DETERMINATION DE LA VITESSE DE ROTATION DIFFERENTIELLE

(43) Veröffentlichungstag der Anmeldung: 15.03.2006
(73) Patentinhaber: Viscotherm AG, 8132 Hinteregg-Zürich (CH)
(72) Erfinder: CUNNINGHAM, Sinclair, Upton, Kirkcaldy KY11TE (GB); FORSTER, Peter, CH-8006 Zürich (CH)
(74) Vertreter: Kastel, Stefan
(86) Internationale Anmeldenummer: PCT/EP2003/004147
(87) Internationale Veröffentlichungsnummer: WO 2004/094066

(56) Entgegenhaltungen:
- WO-A-84/01804
- DE-A- 2 525 280

## Beschreibung

Die Erfindung betrifft eine Zentrifuge mit den Merkmalen des Oberbegriffes des Patentanspruches 1, wie sie aus der WO-A-84 01804 bekannt ist.

Die Erfindung bezieht sich demnach auf eine Zentrifuge mit einer umlaufend gelagerten Trommel und einer konzentrisch in dieser mit Differenzdrehzahl umlaufend gelagerten Schnecke, die von einem zentralen äußeren (ortsfest aufgestellten) Motoraggregat angetrieben sind und zwischen die - insoweit als die Differenzdrehzahl steuerbar bestimmendes Getriebe - ein Hydromotor mit seinem Gehäuse einerseits und seinem Rotor andererseits eingeschaltet ist, dessen Speisung durch eine Hydraulikpumpe erfolgt.

Zentrifugen der vorstehend genannten Art sind solche, bei denen zwischen zwei mit Differenzdrehzahl umlaufenden Teilen ein Getriebe eingeschaltet ist; diese beiden Teile sind mit Trommel und Schnecke bezeichnet, und zwar in Anlehnung an Dekantierzentrifugen, die hier vornehmlich angesprochen sind. Es handelt sich insbesondere um Vollmantel-Schnecken-Zentrifugen, auch Siebtrommeldekanter und Vollteichdekanter. Ebenso eingeschlossen sind die Anzahl und Art der durch die Zentrifugalkraft, voneinander getrennten Phasen des eingespeisten Feststoff-Flüssigkeits-Gemisches, auch Suspension genannt. Diese Zentrifugen können für eine Zweiphasentrennung Feststoff/Flüssigkeit oder aber auch eine Mehrphasentrennung mit mehreren Flüssig- oder Feststoffphasen vorgesehen sein. Die Trennung geschieht aufgrund des unterschiedlichen spezifischen Gewichtes der abzutrennenden Phasen durch Zentrifugalkraft. Zentrifugen dieser Art gehören im breiten Spektrum zum Stand der Technik.

Es ist bei solchen bekannten Zentrifugen grundsätzlich möglich, die beiden mit Differenzdrehzahl umlaufenden Teile der Zentrifuge mit getrennten ortsfesten Motoraggregaten (Antriebsmotor plus Getriebe) anzutreiben. Doch wird regelmäßig nur ein ortsfestes Antriebsmotoraggregat vorgesehen, das eines der beiden Teile, vorzugsweise die Trommel, antreibt, während von dieser Antriebsbewegung die Drehbewegung des anderen Teiles durch ein die Differenzdrehzahl zwischen den Teilen bestimmendes Getriebe abgeleitet wird. Dabei ist von Bedeutung, dass das zwischen den beiden Teilen zu übertragende Drehmoment in der Regel besonders hoch ist. Das zwischengeschaltete Getriebe muss diesen hohen Drehmomenten gerecht werden. Bislang wurden für diese zwischengeschalteten Getriebe beispielsweise sehr leistungsfähige Zykloidengetriebe vorgesehen, die jedoch mit unveränderlichem Übersetzungsverhältnis arbeiten, so dass vielen regelungstechnischen Erfordernissen und Anpassungen an die jeweilig zu verarbeitende Suspension gerecht werdenden Differenzdrehzahländerungen nicht Rechnung getragen werden konnte.

Eine andere Möglichkeit der Verwirklichung eines solchen zwischengeschalteten Getriebes ist ein Hydromotor, der aufgrund der einfachen Bemessung der zugeführten Menge der hydraulischen Druckflüssigkeit hinsichtlich seiner Drehzahl einfach zu steuern ist. Eine solche gesteuert einstellbare Differenzdrehzahl ist besonders vorteilhaft, weil je nach zu verarbeitender Suspension nur durch empirisches Ausprobieren ein optimiertes Trennergebnis erreicht werden kann. Dabei ist beachtlich, dass die zugeführte Menge an Suspension pro Zeiteinheit und insbesondere in ihrer Konsistenz nicht einheitlich ist, so dass diese Steuerung über eine Regelung ergänzbar sein soll. So können beispielsweise sich durch diesen durch nicht konstante Suspensionsparameter etc. einstellende Anhäufungen der Feststoffphase in Richtung einer Verstopfung der Maschine anwachsen, was sich durch ein erhöhtes Drehmoment der Schnecke äußert, woraufhin man durch Erhöhung der Differenzdrehzahl eine Beschleunigung der Feststoffabfuhr erreichen kann, so dass sich dieser Verstopfungsgefahr entgegenwirken lässt. Ein besonderes Problem ist auch, dass bei Ausfall des zentralen äußeren Motorantriebsaggregates die stehen bleibende Trommel nicht mehr von dem dort sedimentierten Feststoff befreit wird. Beispiele einer solchen Zentrifuge, deren zwischengeschaltetes Getriebe mit einem drehzahlvariablen, hochmomentigen, langsam laufenden, mitrotierenden Hydromotor verwirklicht ist, zeigen die Patente FR 542 659, FR 69 42 189 und US 3,923,241. Erforderlich für die Speisung solcher zwischen Trommel und Schnecke eingeschalteter Hydromotoren ist ein außerhalb - ortsfest - angeordnetes Pumpenaggregat, wie dies dieser Stand der Technik zeigt, weil die den Hydromotor speisende Hydraulikflüssigkeitsmenge von einer stationären Zuführleitung aus in das rotierende Zentrifugensystem überführt werden muss. Dies gelingt - etwa in analoger Vorstellung bei einem Elektromotor durch Schleifring/Bürste - mittels einer sogenannten Drehdurchführung. Diese ist aufgrund des großen Schluckvolumens erheblichen Durchlaufmenge der unter hohem Druck eingespeisten Hydraulikflüssigkeit entsprechend hohen Anforderungen ausgesetzt, sowohl was die Durchlaufmenge als auch den Druck anbelangt, so dass Baugröße und insbesondere auch Leckanfälligkeit dieses diffizilen Bauelementes besondere Probleme bereitet. Obwohl also ein solcher mitrotierender Hydromotor große Vorteile hinsichtlich Leichtigkeit, gute Regelbarkeit und Robustheit in sich vereint, ist die nach bisheriger Vorstellung erforderliche Drehdurchführung ein beeinträchtigendes Problem.

Aus der eingangs erwähnten WO 84/01804 ist eine Zentrifuge mit einer umlaufend gelagerten Trommel und einer Schnecke bekannt, die konzentrisch in der Trommel mit Differenzdrehzahl umlaufend gelagert ist. Die Trommel und die Schnecke sind von einem zentralen äußeren Motoraggregat angetrieben. Weiter ist ein die Differenzdrehzahl steuerbar bestimmendes Getriebe in Form eines Hydromotors vorgesehen. Der Hydromotor ist mit seinem Gehäuse einerseits und seinem Rotor andererseits im Detail beschrieben. Es ist weiter eine den Hydromotor speisende Hydraulikpumpe in Form einer Radialkolbenhydraulikpumpe offenbart. Diese Hydraulikpumpe dreht sich gemeinsam mit dem Hydromotor. Der Läufer der Hydraulikpumpe ist über einen zylindrischen Stift und eine damit integral ausgeführte Welle und einen Handgriff außerhalb der rotierenden Zentrifugenteile nicht mit drehend abgestützt. Die Flüssigkeitsmenge, die von der Hydraulikpumpe zum Hydromotor geführt wird, wird durch eine Exzentrizität des Stiftes eingestellt. Diese Exzentrizität wird über Relativverstellung von zwei Griffen und einer Welle sowie einer Hülse eingestellt, also insgesamt über Teile, die nicht mit rotierend angeordnet sind. Der Hydromotor und die Hydraulikpumpe bilden dabei ein geschlossenes hydraulisches System, wobei sämtliche Stellorgane durch ein Drehlager hindurchgeführt werden müssen.

Der Erfindung liegt von daher die Aufgabe zugrunde eine Zentrifuge der im Oberbegriff des Anspruchs 1 genannten Art mit einem mitrotierenden Hydromotor als steuerbare betriebliche Verbindung und speisender Hydraulikpumpe zur Verfügung zu stellen, die weit aus geringe Anforderungen an eine Drehdurchführung bezüglich Größe und Kompliziertheit des Aufbaues hinsichtlich der Beherrschung von Leckverlusten stellt.

Dies wird erfindungsgemäß durch eine Zentrifuge mit den Merkmalen des beigefügten Anspruchs 1 erreicht. Vorteilhafte Ausgestaltungen sind Gegenstand der Unteransprüche.

Erfindungsgemäß ist dem Hydromotor mindestens die diesen speisende Hydraulikpumpe (Speisepumpe) mitrotierend zugeordnet, deren Läufer außerhalb der rotierenden Zentrifugenteile nicht mitdrehend abgestützt ist (Abstützhebel). Weiter ist erfindungsgemäß vorgesehen, dass die Änderung der von der Hydraulikpumpe zum Hydromotor zugeführte Flüssigkeitsmenge über ein Verstellorgan bewerkstelligt wird, welches hydraulisch betätigt wird und auf der Einheit aus Hydromotor und Hydraulikpumpe mitrotierend angeordnet ist.

Durch die Verlagerung der Hydraulikpumpe von ihrem bisherigen ortsfesten Aufstellungsort in die Zentrifuge, d.h. deren drehende Teile und deshalb mitrotierend zum Hydromotor einerseits und die Änderung der von der Hydraulikpumpe zum Hydromotor zugeführten Flüssigkeitsmenge über ein steuerndes/regelndes mitrotierendes Verstellorgan andererseits wird erreicht dass die sogenannte Drehdurchführung im Niederdruckbereich angesiedelt wird und wesentlich geringere Hydraulikflüssigkeitsmengen weiterzuleiten hat als bisher.

Damit kann die Drehdurchführung nicht nur einfacher und kleiner aufgebaut sein, auch die Leckverluste in diesem Bereich werden geringer. Eine Drehdurchführung ist allerdings in dieser wesentlich unkomplizierteren Ausgestaltung gleichwohl hoch vorgesehen, weil der Speisekreislauf zwischen Hydraulikpumpe und Hydromotor nicht stabil ist. Hydromotor und Hydraulikpumpe weisen unvermeidlich Leckverluste auf; die Hydraulikflüssigkeit selbst bleibt aufgrund von Temperatureinflüssen und Belastungen nicht konstant, sie bedarf der Aufbereitung. Zu diesem Zwecke wird ein Teilstrombereich in der Hydraulikflüssigkeit abgezweigt und über einen Spülkreislauf aufbereitet.

Die Hydraulikpumpe (Speisepumpe) für den Hydromotor ist vorzugsweise mit letzterer in ein gemeinsames Gehäuse aufgenommen, wobei die Pumpenläuferabstützung nach außerhalb geführt ist und ortsfest erfolg.

In weiterhin bevorzugter Ausführung mit einer ein konstantes Verdrängervolumen aufweisenden Speisepumpe ist das Verstellorgan ein Mengenregelventil, das die von Hydromotor nicht benötigte Menge an Speiseflüssigkeit in den drucklosen Bereich des Flüssigkeitskreislaufes zurückleitet, wobei dieses Mengenreglerventil entweder die vom Arbeitskreislauf abgezweigte Flüssigkeitsmenge einstellt (2-Wege-Mengenregelung) oder direkt die zum Hydromotor geförderte Menge (3-Wege-Mengenregelung) regelt.

In weiterhin bevorzugter Ausführung ist eine Steuerblende, durch welche die geregelte Strömung an Hydraulikflüssigkeit fließt, durch die Anwendung des Rückfaufdruckes oder mit einem Proportionalmagneten gesteuert.

Bei einer rotierenden Hydraulikpumpe mit variablem Verdrängervolumen wird bevorzugt derart vorgegangen, dass das Verstellorgan ein hydraulisch betätigter Stellzylinder ist, der über ein Ventil (Servo-Glied) angesteuert wird.

In anderer Ausführung wird das Servo-Glied direkt über einen Proportionalmagneten angesteuert.

In weiterer Ausbildung bzw. Abänderung der Ansteuerung wird das Servo-Glied direkt oder indirekt über den Ladedruck einer Ladepumpe betätigt.

Die zur Konditionierung der Antriebsflüssigkeit dienenden Konditionierelemente (Kühl- und/oder Filtereinrichtung) des Spülkreislaufs sind bevorzugt außerhalb des rotierenden Systems liegend angeordnet, doch können sie auch in den rotierenden Teil mit aufgenommen sein.

Schließlich ist in weiterhin bevorzugter Ausführung die Ladepumpe wie die Hydraulikpumpe mit dem Hydromotor mitrotierend angeordnet.

Neben der Einstellung einer bestimmten Differenzdrehzahl zwischen Trommel und Schnecke in Abhängigkeit von der zu verarbeitenden Suspension bzw des beabsichtigten Trennergebnisses können auch regelungstechnische Gesichtspunkte zur Stabilisierung eines bestimmten Betriebes auftreten, insbesondere bei schwankender Suspensionskonsistenz, unregelmäßig anfallender Feststoffmenge und dergleichen, wodurch sich das der Schnecke abverlangte Drehmoment ändert. Zur Erfassung solcher Drehmomentverhältnisse ist in weiterhin bevorzugter Ausführung vorgesehen, die Abstützkraft des bzw. der Pumpenläufer außerhalb der drehenden Zentrifugenteile abzutasten und zu entsprechenden Regel- und Steuergrößen auszunutzen.

Durch die Erfindung werden eine Reihe erheblicher Vorteile erreicht:
- ein gesondertes Pumpenaggregat entfällt
- es ist nur noch ein Elektromotor nötig
- die Maschine braucht eine kleinere Motorisierung: bei Schneckenüberlast und Abschaltung der Produktenzufuhr kann der Elektromotor für den Schneckenantrieb mehr Leistung erbringen
- bei elektrischem Netzausfall wird der Betrieb vom Schneckenantrieb bis zum Trommelstillstand gewährleistet.
- Leichte, kompakte Bauweise
- Verbesserung des Gesamtwirkungsgrades durch ein kurzes Leitungssystem ohne Engpässe und durch Wegfall der volumetrischen Verluste der Drehdurchführung. Dieser energietechnische Aspekt ist ganz besonders hervorzuheben gegenüber solchen Systemen, wie sie in den Patentschriften FR 6942189 und US 3923241 aufgeführt sind.

Anhand der beiliegenden Figuren wird die Erfindung nachstehend näher erläutert. Es zeigen
- Figur 1: eine prinzipielle Darstellung einer Vollmantel-Schnecken- Zentrifuge;
- Figur 2: eine Schemazeichnung einer erfindungsgemäß eingesetzten Einheit aus Hydromotor und einer diesen speisenden Hydraulikpumpe im Bereich der drehenden Teile der Zentrifuge;
- Figur 2a: ein hydraulisches Schaltbild des Aufbaus gemäß Figur 2;
- Figur 3: ein generalisiertes hydraulisches Schaltbild des erfindungsgemäßen Aufbaues nach Figur 2, bei dem ersichtlich ist, dass die Flüssigkeitsmengensteuerung bzw. Regelung durch ein Verstellorgan erfolgt, das mit dem Hydromotor und der Hydraulikpumpe im rotierenden Teil der Maschine angeordnet sind;
- Figuren 4 und 5: Beispiele einer Flüssigkeitsmengenregelung entweder durch Ableitung der nicht benötigen Speiseflüssigkeit einer von der Hydraulikpumpe abgezweigten Flüssigkeitsmenge in dem drucklosen Bereich des Flüssigkeitsumlaufes oder durch Regelung der zum Hydromotor geförderten Speiseflüssigkeit direkt;
- Figuren 6 bis 8,: wonach sich eine Steuerblende eines Flüssigkeitsmengenreglers sowohl auf dem rotierenden System als auch auf den nicht rotierenden System befinden kann;
- Figuren 9 bis 10: Ausführungen, bei denen die Steuerblende des Flüssigkeitenmengenreglers, durch welche die geregelte Strömung fließt, durch den Rücklaufdruck oder mit Hilfe eines Proportionalmagneten angesteuert wird;
- Figuren 11 bis 16: Ausführungsbeispiele, bei denen das Verstellorgan einen hydraulisch betätigten Stellzylinder aufweist, der über ein als Servo-Glied wirkendes Ventil angesteuert wird;
- Figur 13: aus der vorstehenden Beispielsreihe eine Ausführung, bei der das Servo-Glied direkt über einen Proportionalmagneten betätigt wird;

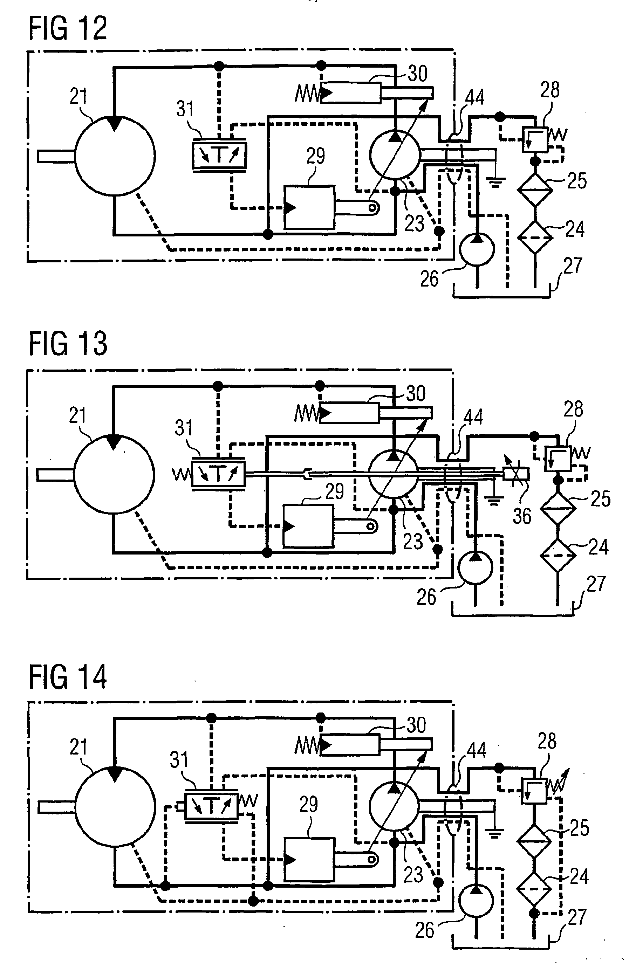

- Figuren 12, 14 und 15,: wobei in dieser Beispielsreihe das Servo-Glied direkt oder indirekt über den Ladedruck einer Ladepumpe angesteuert wird;

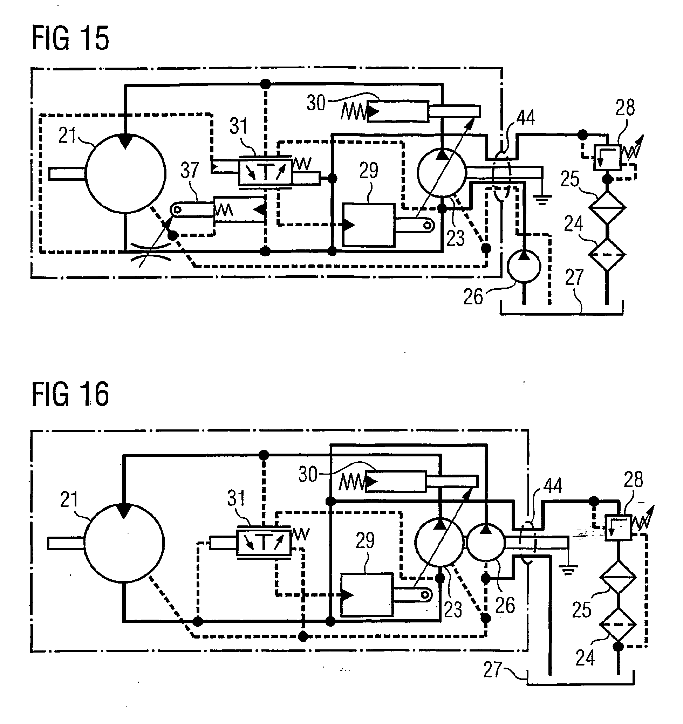

- Figur 16: zeigt die in den Ausführungsbeispielen wiedergegebene Anordnung von Konditionierungselementen der Hydraulikflüssigkeit außerhalb des rotierenden Systems sowie die Anordnung der Ladepumpe mitrotierend mit dem Hydromotor der Speisepumpe und den Steuer- bzw. Regelungselementen für die Speisung.

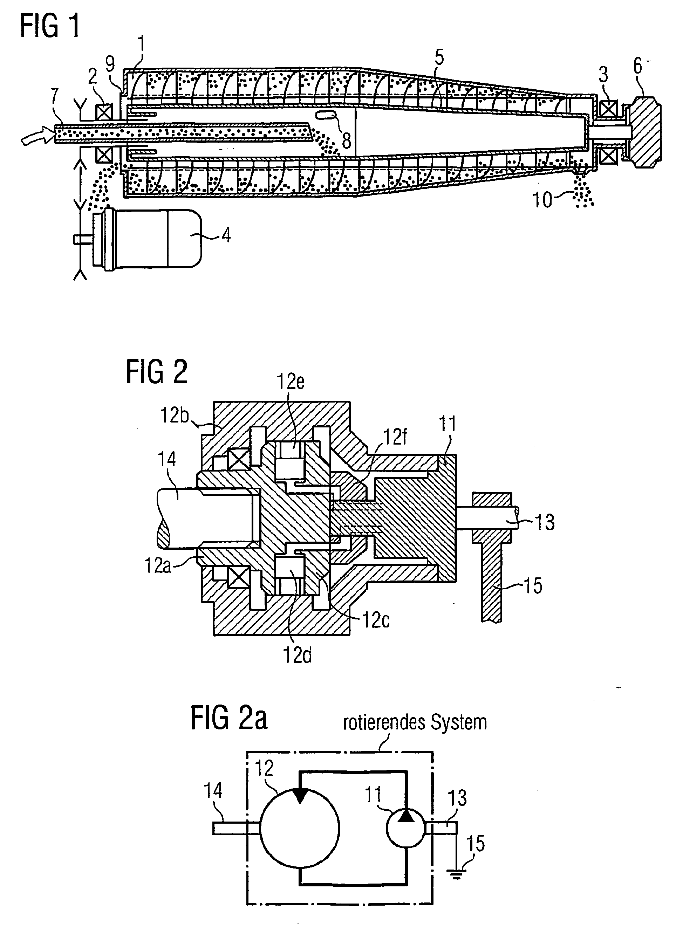

Wie aus der Figur 1 ersichtlich, besteht eine solche Maschine in großen Zügen aus einer Trommel 1, die sich über die Lager 2 und 3 dreht und durch den Motor 4 angetrieben wird; koaxial in der Trommel befindet sich eine Schnecke 5, die mittels Schneckenantrieb 6 eine leicht von der Trommeldrehzahl abweichende Drehzahl aufweist. Somit dreht die Schnecke gegenüber der Trommel mit einer Differenzdrehzahl. Über das Ausgaberohr 7 wird das Produkt bzw. ein Fest-Flüssig-Gemisch in die Schneckennabe eingespeist, welche über Öffnungen 8 in den Trennraum gelangt und dort einen Ringteich bildet, dessen Höhe durch die Überlaufwehre 9 begrenzt wird. Die schwerere Phase (Sediment) setzt sich an der Trommelwand ab und wird von der Schnecke 5 über den Konus aus dem Teich gefördert bis zu den Auswurföffnungen 10, wo sie herausgeschleudert wird.

Figur 2 zeigt eine schematische Darstellung eines solchen Schneckenantriebes 6. Als Beispiel für einen hochmomentigen Hydromotor 12 wird eine mehrhubige Radialkolbenmaschine gezeigt. In ihrem Gehäuse 12b, das an die Trommel angeschlossen ist, dreht ein Rotor 12c mit radial angeordneten Kolben 12d, die über Rollen 12e an der Kurvenscheibe 12a die tangentiale Kraft erzeugen. Die Arbeitskammern werden abwechselnd durch den Verteiler 12f mit Drucköl gespeist, wobei der Verteiler wiederum von einer Hydraulikpumpe 11 gespeist wird, deren Läuferwelle 13 an einem Hebelarm oder Abstützhebel 15 befestigt ist, der deren Drehmoment (ortsfest) abstützt. Die Schneckenwelle 14 wird in den Rotor 12c verdrehfest eingeführt. Es handelt sich also um ein umlaufendes hydrostatisches Getriebe im geschlossenen Kreislauf, wie es das Schaltschema von Fig. 2a rudimentär darstellt. Ein solches Getriebe ist jedoch im Dauerbetrieb nur tauglich, wenn kontinuierlich ein Teil der Umlaufmenge abgezogen wird (15-25%), zwecks Kühlung und Filterung und so wiederum eingespeist wird (Spülung). Dieser Spülkreislauf wird auf der Niederdruckseite des Systems angeordnet, wobei man, je nach Pumpenart, öfters für einen minimalen Vorspanndruck sorgt, damit über dem Saugbereich der Hydraulikpumpe 11 (besonders bei hohen Drehzahlen) keine Kavitation auftreten kann.

Die Figuren 12 bis 16 zeigen ein solches Antriebssystem mit Spülölkreislauf. Hauptantriebsquelle ist der Motor 4 (siehe Fig. 1), der das gesamte rotierende System antreibt, inkl. die für den Schneckenantrieb vorgesehener Hydraulikpumpe 23. Am Ansaug der Hydraulikpumpe 23 wird Spülöl ausgespeist und über einen Filter 24, um einen Kühler 25 und anschließend über ein Vörspannventil 28 in einen Tank 27 geleitet. Eine Ladepumpe 26 saugt frisch konditioniertes Öl aus dem Tank 27, welches am Rücklauf vom Hydromotor 21 eingespeist wird. Getrennt vom Spülkreislauf verläuft eine Leckleitung zum Tank (gestrichelte Linie).

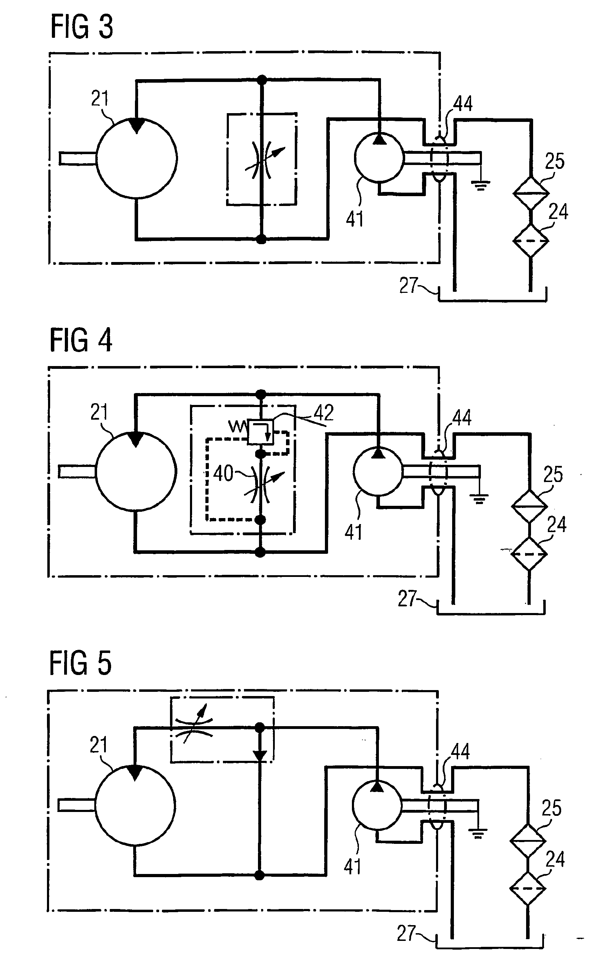

Figur 3 zeigt insoweit symbolisch, dass nicht nur die Hydraulikpumpe zum Speisen des Hydromotors 21 diesem - vorzugsweise in einem gemeinsamen Gehäuse - drehtechnisch zugeordnet ist, sondern auch die Steuerung/Regelung des von der Hydraulikpumpe zum Hydromotor 21 geförderten Flüssigkeitsstromes, damit der Hydromotor 21 mit einstellbarer Drehzahl und damit - am Beispiel des Dekanters mit einstellbarer Differenzdrehzahl zwischen Trommel 1 und Schnecke 5 - betrieben werden kann. Dies ist in Figur 3 durch die dort zwischen dem Hydromotor 21 und der mitrotierend angeordneten Hydraulikpumpe 41 angedeutete regelbare Blende insoweit symbolisch erfasst. Über die Drehdurchführung 44 wird demnach grundsätzlich die Betriebsflüssigkeit über die Kühl- und/oder Filtriereinrichtung - Filter 24 und Kühler 25 - dem Tank 27 entnommen und in diesen zurückgeführt oder umgekehrt.

Figur 4 zeigt in Richtung Ausführung genauer ein gesteuertes Mengenreglerventil 42 in Kombination mit einer zugeordneten Steuerblende 40, welches die vom Hydromotor 21 nicht benötigte Druckflüssigkeitsmenge in den drucklosen Bereich ableitet (2-Wege-Mengenregelung) während Figur 5 die Anordnung der geregelten Steuerblende 40 im Speisekreislauf zwischen Pumpe 41 und Hydromotor 21 zeigt (3-Wege-Mengenregelung).

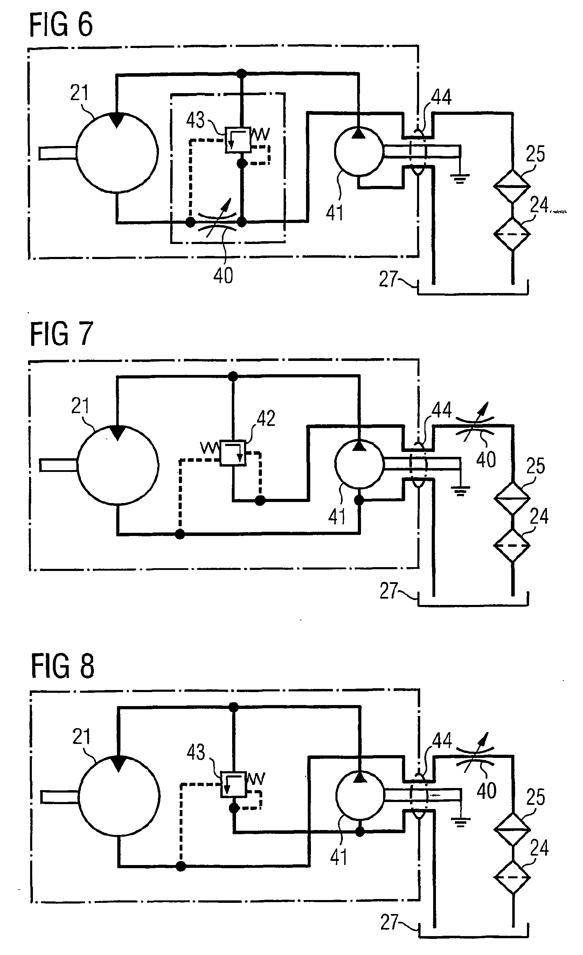

Gemäß Figur 6 ist die Steuerblende 40 in den Rücklaufbereich des Hydraulikmotors 21 eingeschaltet, das Mengenreglerventil 43 steuert den Arbeitsablauf. Wie im Vergleich zu Figur 6 die Figuren 7 und 8 erkennen lassen, kann die Steuerblende 40 des jeweiligen Mengenregelventils 42 bzw. 43 auch außerhalb des rotierenden Systems angeordnet sein.

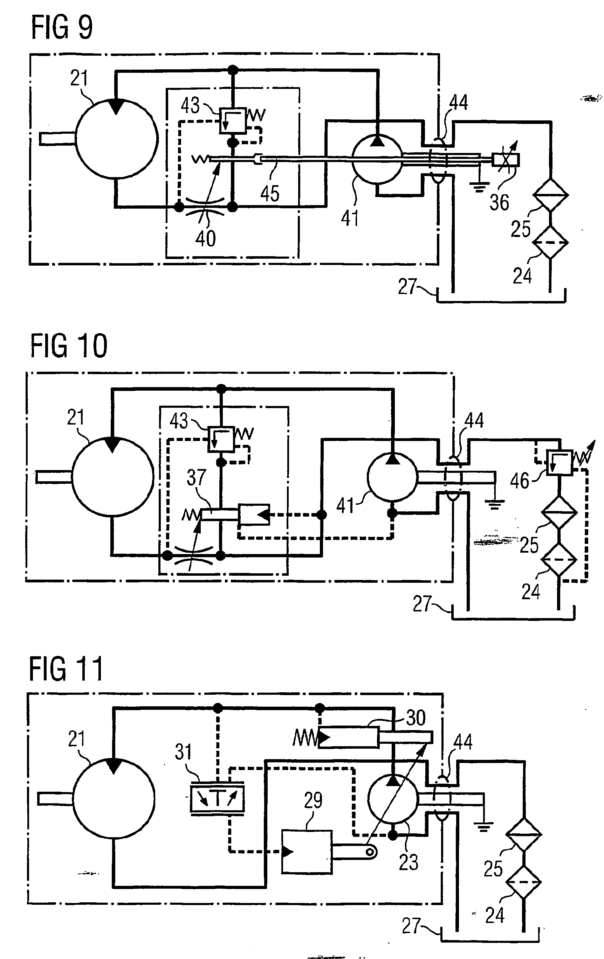

Die weiteren Beispiele nach den Figuren 9 und 10 zeigen den Einsatz eines Proportionalmagneten 36 zur Steuerung des mitrotierenden Mengenregelventils 43 mit Steuerblende 40 bzw. die Steuerung einer anderen Steuerblende 37, durch welche die geregelte Strömung fließt, mit Hilfe des Rücklaufdruckes, der durch das außerhalb des rotierenden Systems angeordneten Ventildruckes 46 bestimmt ist.

Ab Figur 11 werden Beispiele aufgeführt, bei denen die Hydraulikpumpe 23 ein veränderbares Verdrängervolumen aufweist, wozu zwei gegenwirkende Stelluylinder 29 und 30 vorgesehen sind. Der kleinquerschnittige Stellzylinder 30 wird mit dem Betriebsdruck der Hydraulikpumpe 23 beaufschlagt und wird dabei noch zusätzlich von einer Feder unterstützt. Der Stellzylinder 29 ist vom größeren Querschnitt und wird über einen Servo-Schieber 31 angesteuert. Auf der rechten Seite des Servo-Schiebers 31 kann eine Feder wirken, deren Druckkraft mit steigender Auswirkung des Stellzylinders 29 nach links zunimmt (Wegrückführung). Wird der Servo-Schieber 31 unter Druck gesetzt, so wird der Stellzylinder 29 soweit verschoben, bis am Servo-Schieber 31 Kräftegleichgewicht (Druckgegenfeder Figur 13.) herrscht. Somit entspricht die Auslenkung des Stellzylinders 29 dem angegebenen Druck auf den Servo-Schiebers 31.

Dabei kann der hier als Servo-Glied 31 eingesetzte Servo-Schieber direkt über einen Proportionalmagneten gesteuert sein (Figur 13). Der Servo-Schieber 31 kann aber auch direkt oder indirekt über den Ladedruck der Ladepumpe 26 angesteuert werden (Ventil 28).

Wie in den Figuren nicht dargestellt, können die Kühl- und Filtriereinrichtungen - Filter 24 und Kühler 25 - für die Aufbereitung der Hydraulikflüssigkeit ebenfalls innerhalb des rotierenden Systems angeordnet sein, gemäß den gezeichneten Ausführungsbeispielen sind sie jedoch wie der Tank 27 generell von dem rotierenden System über die Drehdurchführung 24 insoweit abgekoppelt ortsfest vorgesehen.

Figur 16 zeigt ein weiteres Ausführungsbeispiel, wonach auch die Ladepumpe 26 mit in das rotierende System aus Hydromotor 21, Hydraulikpumpe 23 bzw. 41 und Mengensteuerung bzw. Mengenregelung der Speiseflüssigkeitsmenge mit aufgenommen ist.

## Patentansprüche

1. Zentrifuge mit einer umlaufend gelagerten Trommel (1) und einer konzentrisch in dieser mit Differenzdrehzahl umlaufend gelagerten Schnecke (5), die von einem zentralen äußeren ortsfest aufgestellten Motoraggregat (4) antreibbar sind und zwischen die ein Hydromotor (12; 21) mit seinem Gehäuse (12b) einerseits und seinem Rotor (12c) andererseits eingeschaltet ist, dessen Speisung durch eine Hydraulikpumpe (11; 23; 41) erfolgt,
wobei diese Hydraulikpumpe (11; 23; 41) dem Hydromotor (12; 21) mitrotierend zugeordnet ist, deren Läufer (13) außerhalb der rotierenden Zentrifugenteile nicht mitdrehend abgestützt ist (Abstützhebel 15), **dadurch gekennzeichnet,**
**dass** die Änderung der von der Hydraulikpumpe (11, 23, 41) zum Hydromotor (12, 21) zugeführten Flüssigkeitsmenge über ein Verstellorgan (42; 43; 29, 30) bewerkstelligt wird, welches hydraulisch betätigbar und auf einer Einheit (6) aus Hydromotor (12, 21) und Hydraulikpumpe (11; 23; 41) mitrotierend angeordnet ist.

2. Zentrifuge nach Anspruch 1,
**dadurch gekennzeichnet,**
**dass** die Hydraulikpumpe (41) ein konstantes Verdrängervolumen aufweist, und dass das Verstellorgan ein Mengenreglerventil (42, 43) ist, welches die vom Hydromotor (12; 21) nicht benötigte Menge in den drucklosen Bereich des Flüssigkeitskreislaufes zurückleitet, wobei dieses Mengenreglerventil (42, 43) entweder die vom Arbeitskreislauf abgezweigte Flüssigkeitsmenge einstellt oder direkt die zum Hydromotor (12, 21) geförderte Flüssigkeitsmenge regelt.

3. Zentrifuge nach Anspruch 2,
**dadurch gekennzeichnet,**
**dass** eine Steuerblende (40) des Mengenreglerventils (42, 43), durch welche eine geregelte Hydraulikflüssigkeitsströmung fließt, sich auf der Einheit (6) aus Hydromotor (12, 21) und Hydraulikpumpe mitrotierend befindet oder ortsfest nicht mitrotierend angeordnet ist.

4. Zentrifuge nach Anspruch 3,
**dadurch gekenntzeichnet,**
dass die mitrotierende Steuerblende (40) über Anwendung des Rücklaufdruckes (Ventil 46) ansteuerbar ist, oder mit einem Proportionalmagnet (36) ansteuerbar ist.

5. Zentrifuge nach Anspruch 1,
**dadurch gekennzeichnet,**
**dass** die rotierende Speisepumpe (23) ein variables Verdrängervolumen aufweist, und dass das Verstellorgan ein hydraulisch betätigter Stellzylinder (29) ist, welcher über ein Servo-Glied (31) ansteuerbar ist.

6. Zentrifuge nach Anspruch 5,
**dadurch gekennzeichnet,**
**dass** das Servo-Glied (31) direkt über einen Proportionalmagneten (36) ansteuerbar ist.

7. Zentrifuge nach Anspruch 5,
**dadurch gekennzeichnet,**
**dass** das Servo-Glied (31) direkt oder indirekt über den Ladedruck einer Ladepumpe (26) ansteuerbar ist.

8. Zentrifuge nach Anspruch 1,
**dadurch gekennzeichnet,**
**dass** Konditionierelemente (24, 25) zur Konditionierung der Hydraulikflüssigkeit ortsfest in einem Spülkreislauf für die Hydraulikflüssigkeit angeordnet sind.

9. Zentrifuge nach Anspruch 7,
**dadurch gekennzeichnet,**
**dass** die Ladepumpe (26) auf der Einheit (6) aus Hydromotor (12, 21) und Hydraulikpumpe mitrotierend angeordnet ist.

## Claims

1. Centrifuge having a rotationally mounted drum (1) and a screw (5) concentrically mounted therein so as to rotate at a differential speed, which are drivable by a central, outer, fixedly installed motor unit (4) and between which is inserted a hydraulic motor (12; 21) with its housing (12b) on the one hand and its rotor (12c) on the other hand, which is supplied by a hydraulic pump (11; 23; 41), wherein this hydraulic pump (11; 23; 41) is co-rotationally associated with the hydraulic motor (12; 21), the armature (13) of which is non-co-rotationally supported (support lever 15) outside the rotating parts of the centrifuge, **characterised in that** the change in the amount of liquid supplied from the hydraulic pump (11, 23, 41) to the hydraulic motor (12, 21) is achieved by means of an adjusting member (42; 43; 29, 30) which is hydraulically actuatable and is co-rotationally mounted on a unit (6) consisting of a hydraulic motor (12, 21) and a hydraulic pump (11; 23; 41).

2. Centrifuge according to claim 1, **characterised in that** the hydraulic pump (41) has a constant displacement volume and **in that** the adjustment member is a quantity regulator valve (42, 43) which conveys the quantity not required by the hydraulic motor (12; 21) back into the non-pressurised region of the liquid circuit, this quantity regulator valve (42, 43) either adjusting the quantity of liquid diverted off from the operating circuit or directly regulating the amount of liquid conveyed to the hydraulic motor (12, 21).

3. Centrifuge according to claim 2, **characterised in that** a control shutter (40) of the quantity regulator valve (42, 43) through which a regulated flow of hydraulic liquid flows is mounted co-rotationally on the unit (6) comprising the hydraulic motor (12, 21) and the hydraulic pump or is fixedly mounted so as to be non-co-rotational.

4. Centrifuge according to claim 3, **characterised in that** the co-rotating control shutter (40) can be actuated by applying return pressure (valve 46) or can be actuated by a proportional magnet (36).

5. Centrifuge according to claim 1, **characterised in that** the rotating feed pump (23) has a variable displacement volume and **in that** the adjusting member is a hydraulically operating adjusting cylinder (29) which can be actuated through a servo-member (31).

6. Centrifuge according to claim 5, **characterised in that** the servo-member (31) can be actuated directly via a proportional magnet (36).

7. Centrifuge according to claim 5, **characterised in that** the servo-member (31) can be actuated directly or indirectly via the charging pressure of a charge pump (26).

8. Centrifuge according to claim 1, **characterised in that** conditioning elements (24, 25) for conditioning the hydraulic liquid are fixedly mounted in a flushing circuit for the hydraulic liquid.

9. Centrifuge according to claim 7, **characterised in that** the charge pump (26) is co-rotationally mounted on the unit (6) comprising the hydraulic motor (12, 21) and the hydraulic pump.

## Revendications

1. Centrifugeuse comportant un tambour (1) monté à rotation ainsi qu'une vis (5) concentrique à celui-ci et montée de façon à tourner avec une vitesse de rotation différentielle, cette vis étant entraînée par un groupe moteur (4) central, installé de manière fixe, à l'extérieur du boîtier (12b), ainsi qu'un rotor (12c) mis en oeuvre de l'autre côté et dont l'alimentation est faite par une pompe hydraulique (11, 23, 41) au moteur hydraulique (12, 21),
la pompe hydraulique (11, 23, 41) tournant avec le moteur hydraulique (12, 21) et sont rotor (13) est soutenu à l'extérieur des parties rotatives de la centrifugeuse de manière à ne pas tourner (levier d'appui 15), centrifugeuse **caractérisée en ce que**
la variation de la quantité de liquide fournie par la pompe hydraulique (11, 23, 41) au moteur hydraulique (12, 21) est assurée par un organe de réglage (42, 43, 29, 30) actionné de manière hydraulique et installé sur une unité (6) formée d'un moteur hydraulique (12, 21) et d'une pompe hydraulique (11, 23, 41) de façon à tourner avec cette unité.

2. Centrifugeuse selon la revendication 1,
**caractérisée en ce que**
la pompe hydraulique (41) a un volume de refoulement constant, et l'organe de réglage est une soupape de réglage de débit (42, 43) qui renvoie la quantité non utilisée par le moteur hydraulique (12, 21), dans la zone sans pression du circuit de liquide,
cette soupape de réglage de débit (42, 43) soit réglant la quantité de liquide dérivée du circuit actif, soit réglant directement la quantité de liquide débitée vers le moteur hydraulique (12, 21).

3. Centrifugeuse selon la revendication 2,
**caractérisée en ce qu'**
un diaphragme de commande (40) de la soupape de régulation de débit (42, 43) traversée par la veine régulée de liquide hydraulique, se trouve sur l'unité (6) composée du moteur hydraulique (12, 21) et de la pompe hydraulique ou est installée de manière fixe, non rotative.

4. Centrifugeuse selon la revendication 3,
**caractérisée en ce que**
l'écran à diaphragme (40) entraîné en rotation, est commandé par l'application de la pression de retour (soupape (46) ou est commandé par un électro-aimant proportionnel (36).

5. Centrifugeuse selon la revendication 1,
**caractérisée en ce que**
la pompe d'alimentation (23) rotative a un débit variable, et
l'organe de réglage est un vérin d'actionnement hydraulique (29) commandé par un organe d'asservissement (31).

6. Centrifugeuse selon la revendication 5,
**caractérisée en ce que**
l'organe d'asservissement (31) est commandé directement par un électro-aimant proportionnel (36).

7. Centrifugeuse selon la revendication 5,
**caractérisée en ce que**
l'organe d'asservissement (31) est commandé directement ou indirectement par la pression de charge d'une pompe de charge (26).

8. Centrifugeuse selon la revendication 1,
**caractérisée en ce que**
des éléments de conditionnement (24, 25) sont installés de manière fixe dans un circuit de rinçage du liquide hydraulique pour conditionner le liquide hydraulique.

9. Centrifugeuse selon la revendication 7,
**caractérisée en ce que**
la pompe de charge (26) est prévue sur le groupe (6) composé du moteur hydraulique (12, 21) et de la pompe hydraulique, pour tourner avec celui-ci.
